# FASCICULE DE BREVET EUROPEEN

(11) **EP 1 142 324 B1**
(45) Date de publication et mention de la délivrance du brevet: **02.05.2003**
(21) Numéro de dépôt: 99961138.7
(22) Date de dépôt: 22.12.1999
(51) Int. Cl.: H04N 5/781, H04N 5/92, H04N 5/926, H04N 5/00, H04N 5/445

(54) **PROCEDE DE STOCKAGE D'UN FLUX DE DONNEES AUDIO ET VIDEO NUMERIQUES, DISPOSITIF DE STOCKAGE ET RECEPTEUR POUR LA MISE EN OEUVRE DU PROCEDE**
VERFAHREN ZUM SPEICHERN EINES DIGITALEN AUDIO- UND VIDEODATENFLUSSES, SPEICHERUNGSVORRICHTUNG UND EMPFÄNGER ZUR DURCHFÜHRUNG DES VERFAHRENS
METHOD FOR STORING DIGITAL AUDIO AND VIDEO DATAFLOW, STORAGE DEVICE AND RECEIVER FOR IMPLEMENTING SAID METHOD

(30) Priorité: 28.12.1998 FR 9816492
(43) Date de publication de la demande: 10.10.2001
(73) Titulaire: THOMSON multimedia, 92100 Boulogne Billancourt (FR)
(72) Inventeur: LE ROUX, Jean Thomson multimedia, 92648 Boulogne Cedex (FR); CHAPEL, Claude Thomson multimedia, 92648 Boulogne Cedex (FR); GUILLEMOT, Jean-Charles Thomson multimedia, 92648 Boulogne Cedex (FR)
(74) Mandataire: Ruellan-Lemonnier, Brigitte
(86) Numéro de dépôt international: FR9903244
(87) Numéro de publication internationale: WO00040020

(56) Documents cités:
- EP-A- 0 662 771
- EP-A- 0 735 776
- EP-A- 0 762 756
- EP-A- 0 788 278
- US-A- 5 706 388
- US-A- 5 742 361
- SARGINSON P A: "MPEG-2: A TUTORIAL INTRODUCTION TO THE SYSTEMS LAYER" IEE COLLOQUIUM ON MPEG WHAT IT IS AND WHAT IT ISN'T,GB,IEE, LONDON, page 4-1-4-13 XP000560804
- STAMMNITZ P ET AL: "HARDWARE IMPLEMENTATION OF THE TRANSPORT STREAM DEMULTIPLEXER FOR THE HDTVT DEMONSTRATOR" SIGNAL PROCESSING OF HDTV. PROCEEDINGS OF THE INTERNATIONAL WORKSHOP ON HDTV,1995, pages 435-441, XP002046490

## Description

L'invention concerne un récepteur d'un flux de données audio et vidéo numériques, en particulier mais non uniquement d'un flux de données audio et vidéo compressées selon la norme MPEG II. L'invention concerne également un procédé d'enregistrement de données du flux et est plus généralement adaptée à l'enregistrement de composantes (par exemple audio et vidéo) synchronisées d'un flux de données numériques. En dernier lieu, l'invention concerne un dispositif de stockage.

Dans un flux de données de type MPEG II TS (Transport Stream' en langue anglaise, signifiant flux de transport), les données audio et vidéo sont présentes sous la forme de paquets élémentaires de flux, encore appelés paquets 'PES'. Ces paquets PES sont inclus dans des paquets de transport TS qui comportent un identificateur ('PID') des paquets PES. Un flux TS est un multiplex temporel des paquets PES audio et vidéo relatifs à un grand nombre de programmes différents. Le flux peut aussi transporter d'autres données numériques, telles des données de signalisation et des données dites privées. Un décodeur de télévision numérique reçoit ce flux et démultiplexe puis décode les paquets PES correspondant à un programme particulier.

Le document EP-A-0 662 771 décrit une méthode de transmission d'informations de programmes dans laquelle différents types de données sont mémorisés. Cependant, une telle méthode ne décrit pas de dispositifs où un flux vidéo numérique est mémorisé dans des blocs de dimension différentes d'une mémoire.

Lors de travaux visant à inclure un dispositif de stockage de type disque dur dans un récepteur de télévision numérique, les inventeurs ont reconnu que la nature disparate des données à enregistrer (flux audio/vidéo d'un côté, données de type fichiers de code ou de paramètres de l'autre) rendait l'accès au dispositif de stockage inefficace si des systèmes de fichiers issus du monde de l'informatique étaient utilisés tels quels.

L'invention a pour objet un dispositif de réception de vidéo numérique, caractérisé en ce qu'il comprend :
- des moyens de réception et de démultiplexage d'un flux numérique multiplexé ;
- des moyens de stockage du flux numérique démultiplexé comprenant deux systèmes de fichiers possédant des tailles respectives de blocs d'enregistrement différentes.

En prévoyant un double système de fichiers sur un même support d'enregistrement, il est possible d'améliorer le comportement du support selon la nature des données à manipuler. Pour l'enregistrement de données audio et vidéo, un système de fichiers possédant des blocs de grande taille est prévue, cette taille étant beaucoup plus grande que celle réservée aux blocs du système de fichiers réservé aux données autres que audio/vidéo. Selon l'exemple de réalisation particulier décrit plus loin, la taille d'un bloc audio/vidéo est ici de 256 secteurs de disque ou encore 128 Ko, tandis que la taille d'un bloc habituel n'est que de quatre secteurs. On peut également envisager des blocs audio/vidéo de taille beaucoup plus grande que 128 Ko.
Ainsi, étant donné la nature substantiellement séquentielle des données audio/vidéo, de grands blocs permettent de réduire la quantité de mémoire nécessaire aux données de service du système de fichiers audio/vidéo, puisque moins de blocs sont à gérer. Toutefois, le maintien d'un second système de fichiers de facture plus classique permet également d'enregistrer des fichiers de taille plus petite, sans perte notable de place à cause de blocs non totalement remplis.

Il est bien clair que d'autres flux de données à accès substantiellement séquentiel ou flux isochrones ou flux de grande taille que des flux audio et/ou video peuvent bénéficier de l'invention.

Selon un mode de réalisation particulier, les blocs du premier système de fichiers sont de grande taille et adaptés à l'enregistrement de flux audio/vidéo et en ce que les blocs du second système de fichiers sont de taille plus faible et adaptés à l'enregistrement de fichiers de plus petite taille que les flux audio/vidéo.

Selon un mode de réalisation particulier, la taille de blocs du premier système de fichiers est plus grande au moins d'un ordre de grandeur que la taille de blocs du second système de fichiers.

Selon un mode de réalisation particulier, le premier système de fichiers est adapté à un accès séquentiel des données enregistrées, tandis que le second système de fichiers est adapté à un accès aléatoire des données qui y sont enregistrées.

En effet, les données de type audio et vidéo requièrent plutôt un accès séquentiel, alors que des données de type 'service' ou 'privées', par exemple des bases de données pour l'élaboration d'un guide de programme ou encore des fichiers de code de programme peuvent être gérés plus efficacement avec un accès aléatoire. On peut ainsi stocker des données de type différent sur un unique support, par exemple un disque dur.

Selon un mode de réalisation particulier, le premier système de fichiers comporte un adressage à indirection simple, tandis que le second système de fichiers comporte un adressage à indirection multiple.
Selon un mode de réalisation particulier, les moyens de stockage comprennent un disque enregistrable comportant un bloc de démarrage unique, une première zone réservée aux données de service du premier système de fichier et aux blocs de données correspondants, et une seconde zone réservée aux données de service du second système de fichiers et aux blocs de données correspondants.

Selon un mode de réalisation particulier, le dispositif comporte en outre
une première mémoire d'écriture vidéo pour l'accumulation d'une quantité prédéterminée de paquets vidéo démultiplexés ;
une seconde mémoire d'écriture audio pour l'accumulation de paquets audio démultiplexés ;
les moyens de stockage étant adaptés pour stocker les paquets audio et vidéo remultiplexés sous la forme de blocs du premier système de fichiers, chaque bloc comportant une première zone pour l'enregistrement des paquets vidéo et de taille fixe égale à ladite quantité prédéterminée, et une seconde zone pour l'enregistrement pour des paquets audio et de taille fixe telle qu'elle soit supérieure ou égale à la quantité maximale de données audio accumulables pendant l'obtention de la quantité prédéterminée de données vidéo.
Les paquets PES audio et vidéo d'un programme issus du démultiplexeur sont mal adaptés à un enregistrement tel quel sur un support approprié. En effet, les paquets PES audio et vidéo étant multiplexés, la nature de leur contenu n'est pas facilement identifiable une fois ces paquets débarrassés de la couche de transport. Un étiquetage de ces paquets représenterait une perte d'espace de stockage importante et complexe à gérer.

L'enregistrement, sur un support de données tel qu'un disque dur, s'effectue par blocs comportant (entre autres) deux zones de taille fixe, dont l'une est réservée à des données vidéo et l'autre à des données audio. Une fois qu'une quantité dés données vidéo correspondant à la taille de la zone vidéo a été démultiplexée, un bloc complet est écrit, quelle que soit la quantité de données audio reçues à ce moment là.
De par la disposition des zones à l'intérieur d'un bloc, on connaît la nature des paquets PES qui y sont enregistrés, ce qui évite un étiquetage de chaque paquet PES. D'autre part, même si l'ordre de multiplexage initial dans le flux TS des paquets enregistrés n'est pas maintenu strictement au niveau d'un bloc, le rythme de transmission audio et vidéo global est retranscrit.
La relation d'ordre entre le rapport des tailles des zones d'enregistrement d'un bloc et le rapport des débits garantit que la zone réservée à l'audio ne déborde jamais avant que la zone réservée à la vidéo soit remplie.
Le sous-système de formation des blocs audio/vidéo est considéré comme étant une invention en soi.
Selon un mode de réalisation particulier, le dispositif inventif comporte une troisième mémoire lecture vidéo pour la lecture de données vidéo à partir des moyens de stockage et une quatrième mémoire lecture audio pour la lecture de données audio, les tailles respectives des troisième et quatrième mémoires, respectivement lecture vidéo et audio étant égales aux tailles des première et seconde mémoires, respectivement écriture vidéo et audio.

Selon un mode de réalisation particulier, le dispositif comporte en outre :
- une mémoire d'écriture pour transmettre des données aux moyens de stockage, organisée en une zone comportant N mémoires écriture vidéo de type FIFO et une zone écriture audio comportant une mémoire de type FIFO ayant la taille de N mémoires écriture audio ;
- des moyens pour commander le transfert de données vidéo vers une première des N mémoires écriture vidéo et de données audio vers la zone d'écriture audio, le transfert de données vidéo se poursuivant vers une mémoire écriture vidéo suivante lorsque ladite première des N mémoires écriture vidéo est pleine ;
- des moyens de mémorisation de l'emplacement, dans la zone d'enregistrement de données audio, des données audio correspondant à chacune des N mémoires écriture vidéo.

La mise en oeuvre d'une série de mémoires écriture vidéo permet de tamponner les accès en écriture vers les moyens de stockage, au cas où ceux-ci seraient en retard. La gestion de données audio est effectuée à l'aide d'une seule mémoire FIFO, tandis que la gestion des données vidéo est effectuée à l'aide d'une pluralité de mémoires FIFO. L'ensemble des mémoires FIFO audio et des mémoires FIFO vidéo peut être physiquement inclus dans une seule mémoire, dont les différentes zones sont gérées en tant que mémoires FIFO individuelles.

Selon un mode de réalisation particulier, le dispositif comporte en outre des moyens pour initier le transfert des données vidéo et audio mémorisées dans ladite mémoire d'écriture vers les moyens de stockage dès qu'une des N mémoires d'écriture vidéo a été remplie.
La gestion des mémoires d'écriture est de type 'buffer vidéo'.

Selon un mode de réalisation particulier, le dispositif comporte
- une mémoire de lecture pour recevoir des données à partir des moyens de stockage, organisée en une zone comportant N mémoires lecture vidéo de type FIFO et une zone lecture audio comportant une mémoire de type FIFO ayant la taille de N mémoires lecture audio ;
- des moyens pour commander le transfert de données vidéo vers une première des N mémoires lecture vidéo et de données audio vers la zone de lecture audio, le transfert de données vidéo se poursuivant vers une mémoire lecture vidéo suivante lorsque ladite première des N mémoires lecture vidéo est pleine ;
- des moyens de mémorisation de l'emplacement, dans la zone de lecture de données audio, des données audio correspondant à chacune des N mémoires lecture vidéo.

Selon un mode de réalisation particulier, le dispositif comporte en outre des moyens pour initier le transfert des données vidéo et audio mémorisées dans ladite mémoire de lecture vers un décodeur desdites données lorsque l'ensemble des N mémoires de lecture vidéo a été rempli.

En lecture, la gestion des mémoires est de type 'buffer plein'.

L'invention a également pour objet un procédé d'enregistrement de données audio et vidéo dans un récepteur de télévision numérique, caractérisé en ce qu'il comporte les étapes de :
- démultiplexage de paquets audio et vidéo relatifs à un même programme ;
- accumulation simultanée des données vidéo démultiplexées dans une première mémoire et des données audio démultiplexées dans une seconde mémoire ;
- arrêt de l'accumulation dans lesdites mémoires suite à l'obtention d'une quantité prédéterminée de données vidéo dans ladite première mémoire ;
- enregistrement des données vidéo accumulées dans ladite première mémoire et des données audio accumulées dans la seconde mémoire respectivement dans une première zone d'un bloc dont la taille fixe est égale à ladite quantité prédéterminée et dans une seconde zone de ce bloc, la taille de cette seconde zone étant fixe et choisie de manière à ce qu'elle soit supérieure ou égale à la quantité maximale de données audio accumulables pendant l'obtention de ladite quantité prédéterminée de données vidéo.

Selon une variante de réalisation, le procédé comprend en outre l'étape d'enregistrement dans chaque bloc d'une donnée indiquant la quantité de données audio enregistrées dans ce bloc.

Cela permet de déterminer facilement la fin des données audio d'un bloc, sans avoir à effectuer des comparaisons pour détecter un mot binaire particulier contenu dans la zone réservée aux données audio et qui en identifierait la fin.

L'invention a également pour objet un dispositif d'enregistrement de données audio et vidéo caractérisé en ce qu'il comporte un double système de fichiers dont le premier système est destiné à enregistrer des fichiers de type flux audio/vidéo et dont le second système de fichiers comporte des blocs de plus petite taille et est destiné à enregistrer des fichiers de plus petite taille que les flux audio/vidéo.

Selon un mode de réalisation particulier, le dispositif d'enregistrement comporte un disque réenregistrable divisé en secteurs, des blocs de données du premier système de fichiers ayant une taille d'au moins 256 secteurs, des blocs de données du second système de fichiers ayant une taille de quelques secteurs.

D'autres caractéristiques et avantages de l'invention apparaîtront à travers la description d'un exemple de réalisation particulier non limitatif, illustré par les figures jointes parmi lesquelles :
- la figure 1 est un schéma-bloc d'un récepteur-décodeur numérique comportant un dispositif de stockage conforme au présent exemple de réalisation ;
- la figure 2 est un diagramme-bloc d'un exemple de réalisation du dispositif de stockage, en l'occurrence un disque dur ;
- la figure 3 est un schéma illustrant la répartition de zones audio et vidéo dans une mémoire de type FIFO utilisée en tant que tampon pour l'écriture des données ;
- la figure 4 est un schéma d'un bloc de 128 Koctets d'une partie du disque dur réservée à l'enregistrement de flux audio et vidéo;
- la figure 5 est un schéma illustrant les deux types de système de fichier présents sur le disque dur ;
- la figure 6 est un schéma illustrant différentes zones d'enregistrement du système de fichier de type 'flux' ;
- la figure 7 est un organigramme de l'écriture d'un fichier sur le disque ;
- la figure 8 est un schéma illustrant les durées respectives de différentes opérations lors d'une lecture de blocs ;
- les figures 9a et 9b sont des diagrammes illustrant un procédé permettant de réduire les déplacements d'une tête d'écriture/lecture du disque lors d'un enregistrement et d'une lecture simultanés ;
- la figure 10 est un diagramme bloc d'un circuit de récupération d'horloge.

Bien que la description ci-dessous concerne surtout l'enregistrement de paquets PES audio et vidéo démultiplexés, l'invention peut facilement s'appliquer à l'enregistrement direct de paquets de flux de transport (TS) ou programme (PS) ou encore d'autres types de flux, par exemple de type Digital Vidéo (DV).
Selon le présent exemple de réalisation, le dispositif de stockage est un disque dur intégré dans un décodeur de télévision numérique répondant à la norme DVB.

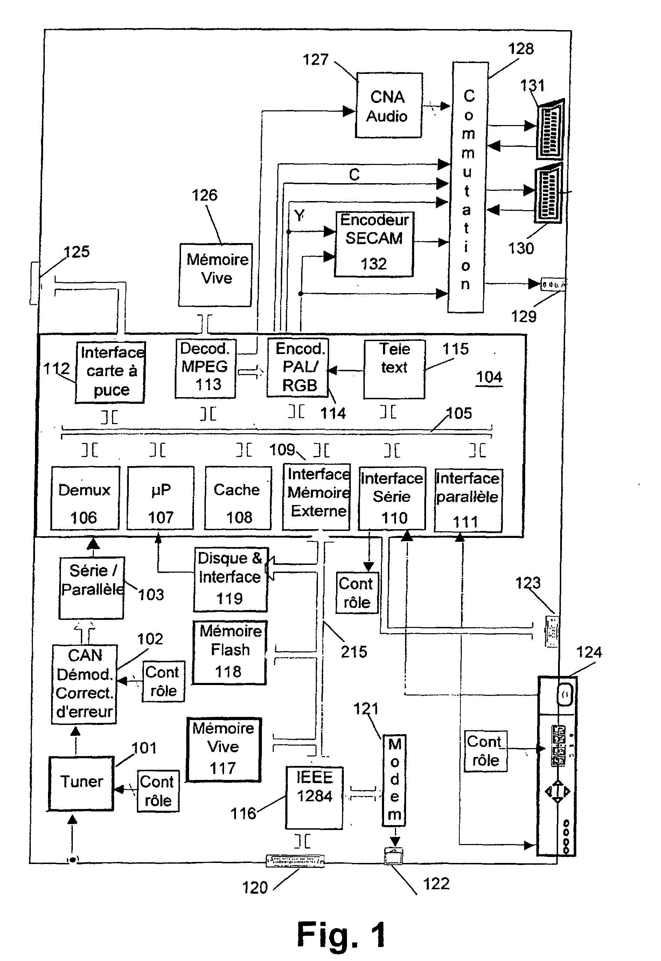

La figure 1 est un diagramme bloc d'un tel décodeur. Ce dernier comporte un tuner 101 relié à un circuit de démodulation et de correction d'erreur 102 qui comporte également un convertisseur analogique-numérique pour numériser les signaux en provenance du tuner. Selon le type de réception, câble ou satellite, la modulation utilisée est de type QAM ou QPSK, et le circuit 102 comporte les moyens de démodulation appropriés au type de réception. Les données démodulées et corrigées sont sérialisées par un convertisseur 103, connecté à une entrée série d'un circuit de démultiplexage et de décodage 104.
Selon le présent exemple, ce circuit 104 est un circuit STi5500 fabriqué par ST Microelectronics. Ce dernier comporte, reliés à un bus parallèle 32 bits central 105, un démultiplexeur DVB 106, un microprocesseur 107, une mémoire cache 108, une interface mémoire externe 109, une interface de communication série 110, une interface entrée/sortie parallèle 111, une interface de carte à puce 112, un décodeur MPEG audio et vidéo 113, un encodeur PAL et RGB 114 et un générateur de caractères 115.
L'interface mémoire externe 109 est reliée à un bus parallèle 16 bits, auquel sont reliés respectivement une interface parallèle 116 de type IEEE 1284, une mémoire vive 117, une mémoire 'Flash' 118 et un disque dur 119. Ce dernier est de type EIDE pour les besoins du présent exemple. L'interface parallèle 116 est également connectée à un connecteur externe 120 et à un modem 121, ce dernier étant relié à un connecteur externe 122.
L'interface de communication série 110 est reliée à un connecteur externe 123, ainsi qu'à la sortie d'un sous-ensemble de réception infra-rouge 124 destiné à recevoir des signaux d'une télécommande non-illustrée. Le sous-ensemble de réception infra-rouge est intégré dans un panneau frontal du décodeur, qui comporte également un dispositif d'affichage et des touches de commande.
L'interface de carte à puce 112 est reliée à un connecteur de carte à puce 125.
Le décodeur audio et vidéo 113 est relié à une mémoire vive 126 de 16 Mbit, destinée à stocker les paquets audio et vidéo non décodés. Le décodeur transmet les données vidéo décodées à l'encodeur PAL et RGB 114 et les données audio décodées vers un convertisseur numérique-analogique 127. L'encodeur fournit les signaux RGB à un encodeur SECAM 132, et fournit également un signal vidéo sous la forme d'une composante luminance Y et d'une composante chrominance C, ces deux composantes étant séparées. Ces différents signaux sont multiplexés à travers un circuit de commutation 128 vers des sorties audio 129, télévision 130 et magnétoscope 131.

Le cheminement des données audio et vidéo dans le décodeur est le suivant : le flux de données démodulé possède un format de flux de transport, aussi appelé 'Transport Stream' ou plus simplement 'TS' en référence au standard MPEG II Systèmes. Ce standard possède la référence ISO/IEC 13818-1. Les paquets TS comportent dans leur en-tête des identificateurs appelés PID qui indiquent à quel flux élémentaire se rapportent les données utiles du paquet. Typiquement, un flux élémentaire est un flux vidéo associé à un programme particulier, tandis qu'un flux audio de ce programme en est un autre. La structure de données utilisée pour transporter les données audio et vidéo compressées est appelée paquet de flux élémentaire ou encore paquet 'PES'.
Le démultiplexeur 106 est programmé par le microprocesseur 107 pour extraire du flux de transport les paquets correspondant à certaines valeurs de PID. Les données utiles d'un paquet démultiplexé sont le cas échéant désembrouillées (si les droits stockés par une carte à puce de l'utilisateur autorisent ce désembrouillage), avant de stocker ces données dans des zones tampon des diverses mémoires du décodeur. Les zones tampon réservées aux paquets PES audio et vidéo sont situées dans la mémoire 126. Le décodeur 113 relit ces données audio et vidéo selon ses besoins, et transmet les échantillons audio et vidéo décompressés respectivement à l'encodeur 114 et au convertisseur 127.
Certains des circuits mentionnés ci-dessus sont contrôlés de manière connue, par exemple à travers un bus de type I2C.

Le cas de figure décrit ci-dessus correspond au décodage direct d'un programme démultiplexé par le décodeur MPEG 113.
Selon l'invention, le récepteur-décodeur comporte un disque dur pour le stockage de masse principalement de données audio et vidéo sous leur forme compressée.

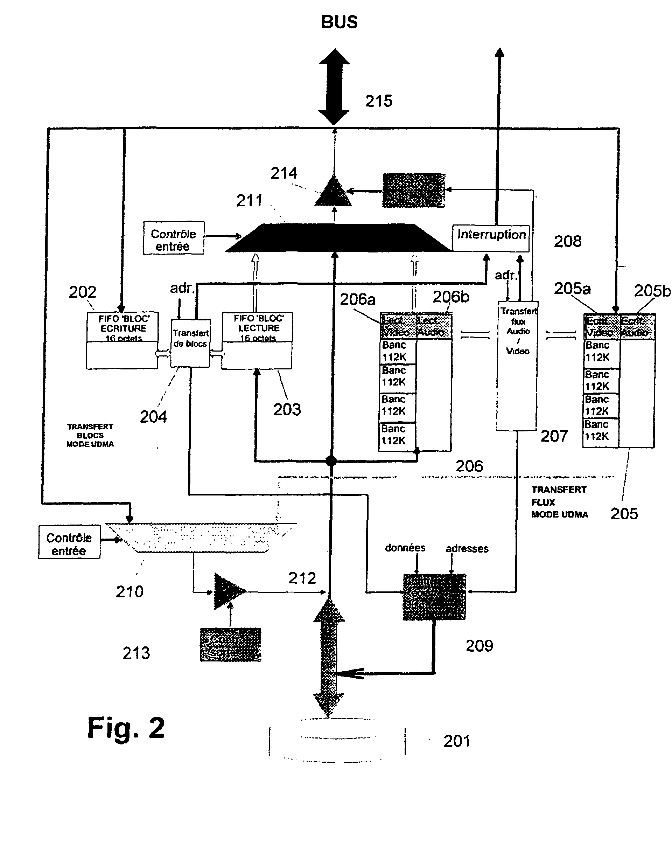

La figure 2 est un diagramme-bloc de l'ensemble 119 comprenant le disque dur et les circuits d'interfaçage le reliant à l'interface mémoire externe 109.
Le disque dur 201 est un disque dur du commerce muni d'une interface Ultra ATA/EIDE. 'ATA' désigne le protocole de communication, connu par ailleurs, du disque spécifique utilisé dans le cadre du présent exemple. Selon le présent exemple de réalisation, le disque comporte un double système de fichiers. Deux systèmes de fichiers; associés à des zones de données respectives sont utilisés en parallèle pour lire et écrire des données sur le disque, le premier système de fichiers étant adapté à l'écriture et à la lecture de données de type fichier informatique, programme, code, etc. appelé par la suite système de fichier 'Bloc', tandis que le second système de fichier est destiné à l'écriture et à la lecture de flux audio et vidéo, ce système de fichiers étant par la suite appelé système de fichier 'Flux'.
Cette dualité se retrouve au niveau de l'architecture des circuits d'interface de la figure 2.

L'écriture et la lecture de blocs de données sont effectuées par l'intermédiaire de respectivement une mémoire de type premier entré premier sorti (FIFO) 202 pour l'écriture et d'une mémoire 203 de même type pour la lecture. Les deux mémoires FIFO ont une taille respective de 16 octets et sont contrôlées par un circuit de transfert de blocs 204 qui gère les pointeurs d'adresses de ces deux mémoires FIFO. Selon le présent exemple de réalisation, ce sont des mémoires de type double port synchrone.
Les échanges de données selon le mode 'Bloc' se font en mode accès mémoire direct, par envoi de salves ('bursts' en langue anglaise) de 16 octets. Ces salves sont tamponnées tant en écriture qu'en lecture par les deux mémoires FIFO 202 et 203, qui permettent l'adaptation du débit disque au débit bus 215 et vice-versa.

Deux mémoires FIFO 205 et 206 sont prévues pour respectivement l'écriture et la lecture des flux audio et vidéo. Chaque mémoire FIFO 205 et 206 comporte, selon le présent exemple de réalisation, une mémoire physique de 512 Koctets, partagée en quatre bancs vidéo de 112 Koctets (rassemblés dans une zone 'vidéo', référencée 205a, respectivement 206a) et une zone audio de 64 Koctets (référencée 205b, respectivement 206b), et est contrôlée par un circuit de contrôle de transfert de flux 207. Chaque banc vidéo et zone audio est géré en tant que mémoire premier entre premier sorti (FIFO). Le circuit 207 gère deux pointeurs d'écriture et deux pointeurs de lecture indépendants pour chacune des séries 205 et 206, à savoir une paire de pointeurs vidéo et une paire de pointeurs audio. Une seule mémoire 205 et 206 est active en lecture et une seule est active en écriture à un moment donné. L'accès aux deux mémoires 205 et 206 est cependant indépendant, permettant une lecture et écriture dite simultanée sur le disque.

Selon une variante du présent exemple de réalisation, les mémoires 202, 203, 205 et 206 sont des zones de la mémoire vive 117, chacune de ces zones étant gérée comme une, ou le cas échéant plusieurs, mémoire(s) de type premier entré premier sorti.
Par ailleurs, une adaptation du présent exemple de réalisation à la gestion de composantes supplémentaires, comme par exemple plusieurs flux élémentaires audio serait aisément réalisable par l'Homme du Métier, en prévoyant les mémoires supplémentaires requises à cet effet.
Par ailleurs, il est également possible d'enregistrer directement des paquets de flux TS, sans en avoir extrait les paquets PES. Dans ce cas, on ne se préoccupe pas de la nature (audio, vidéo ou autre) du contenu des paquets enregistrés, et on enregistre les paquets TS démultiplexés dans des blocs de 128 Ko, c'est à dire en gérant de manière continue les 112 et les 16 Ko. Il n'y a donc pas dans ce cas particulier, retramage selon la nature des paquets élémentaires contenus dans les paquets TS, contrairement à ce qui est effectué lors de l'enregistrement des paquets PES débarrassés de la couche de transport.

Les deux circuits de contrôle de transfert 204 et 207 sont des machines d'état dont le fonctionnement est contrôlé par le microprocesseur 107. Le microprocesseur indique aux contrôleurs les tâches de transfert à effectuer en mode d'accès mémoire direct (mode dit 'UDMA' Ultra Direct Memory Access par la suite), et est prévenu de l'accomplissement de ces tâches à travers une interruption générée par un circuit de contrôle d'interruption 208 relié aux deux circuits de contrôle de transfert 204 et 207. Dans le cadre de l'exemple décrit ici, on utilise le mode UDMA 33 Moctet/s, mais l'invention ne se limite bien évidemment pas à ce mode.
Les deux circuits de contrôle de transfert gèrent l'accès du disque proprement dit à travers un circuit de commande 209 qui permet la mise en oeuvre du disque et son mode d'accès, à savoir l'accès aux registres de commande et contrôle et l'accès mémoire direct UDMA. Le circuit de commande est également relié au microprocesseur 107, pour la gestion directe des registres de contrôle et de commande du disque, ce qui ne met pas en oeuvre les circuits de contrôle de transfert 204 et 207.

Le circuit d'interfaçage de la figure 2 comporte en outre deux multiplexeurs 210 et 211, qui reçoivent en entrée respectivement les trois voies d'entrée des données, c'est à dire des données à écrire sur le disque, et les trois voies de sortie des données, c'est à dire des données lues sur le disque. Chaque multiplexeur possède donc en entrée trois bus de 16 bits et un bus de 16 bits en sortie. La commutation entre les différentes voies est gérée par le microprocesseur 107.
Pour ce qui concerne le multiplexeur d'écriture 210, la première voie d'entrée est constituée par un accès direct du bus de données 215 de l'interface de mémoire externe 109 au bus de données 212 du disque 201, la seconde voie est constituée par la sortie de la mémoire FIFO 202 pour l'écriture de blocs, tandis que la troisième voie est constituée par la sortie de la mémoire FIFO 205, pour l'écriture des flux.
Pour ce qui concerne le multiplexeur de lecture 211, la première voie de sortie est constituée par un accès direct du bus de données du disque au bus de données de l'interface mémoire externe 109, tandis que la seconde voie est constituée par la sortie de la mémoire 203 pour la lecture de blocs, et la troisième voie par la sortie de la mémoire FIFO 206 pour la lecture de flux.
Les sorties respectives des deux multiplexeurs 210 et 211 sont connectées respectivement au bus de données du disque et au bus de données de l'interface mémoire externe à travers des étages de sortie trois états 213 et 214, contrôlés par les automates 204 et 207.

Chaque mémoire 205 et 206 sert de mémoire cache aux données à destination du disque ou en provenance de celui-ci. Le disque selon le présent exemple de réalisation comporte des secteurs de 512 octets. Le contenu de 256 secteurs correspond donc à la taille d'un banc de mémoire vidéo d'une mémoire FIFO d'une des mémoires 205a et 206a, additionné du quart de la taille d'une des zones audio 205b et 206b, à savoir un total de 128 Koctets. Ceci est sensiblement la quantité de données transférable du ou vers le disque pendant le temps moyen de déplacement d'une tête de lecture du disque utilisé dans le présent exemple, à savoir environ 10 ms.
L'utilisation des mémoires FIFO ayant les caractéristiques définies ci-dessus a permis d'obtenir des débits en lecture et écriture simultanées de 15 Mbit/s.

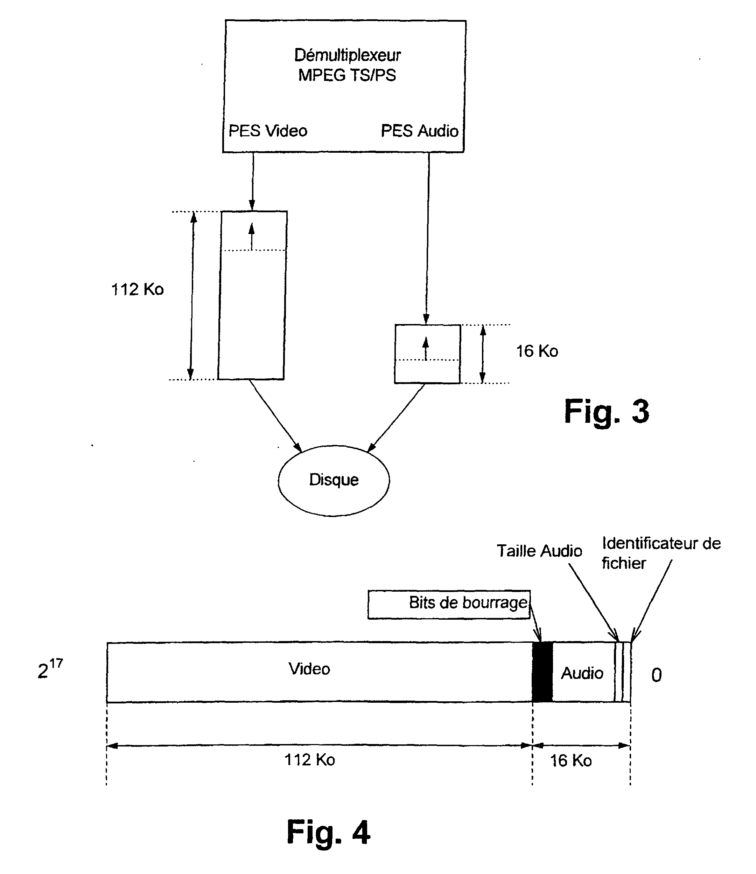

L'écriture d'un flux audio-vidéo sur le disque sera décrite en relation avec les figures 3 et 4.
La figure 3 illustre la répartition des données audio et vidéo au format PES conformément à la norme MPEG II, vers deux mémoires FIFO, à savoir un banc vidéo (l'un des bancs de la partie 205a de la mémoire 205) et une zone audio (partie 205b de la mémoire 205).
Les données sont inscrites sur le disque dans des blocs audio/vidéo de 128 Koctets chacun. Selon la présente invention, on réserve une partie fixe du bloc de 128 Koctets à des données vidéo (112 Koctets) et une autre partie, variable, à des données audio (16 Koctets maximum). Les blocs étant écrits séquentiellement, les données audio et vidéo se trouvent donc entrelacées sur le disque.

Il a été constaté que le rapport entre le débit minimum d'un flux vidéo et le débit maximum d'un flux audio est d'environ 10. En définissant dans un bloc de 128 Koctets une zone de 112 Koctets réservée à la vidéo et de 16 Koctets à l'audio, le ratio est de 7. En d'autres termes, en prenant en considération un flux audio/vidéo dont les données vidéo (sous forme de paquets PES vidéo) sont stockées dès leur démultiplexage dans la zone de 112 Koctets et les données audio (sous forme de paquets PES audio) dans la zone de 16 Koctets, la zone vidéo sera toujours remplie avant la zone audio.
Il est bien évident qu'en fonction des flux et des débits à gérer, d'autres ratios que 7 peuvent également être utilisés. C'est notamment le cas si d'autres algorithmes de compression que ceux préconisés par la norme MPEG sont mis en oeuvre.

Lorsque le banc vidéo de 112 Koctets est rempli, le contenu de ce banc est écrit sur le disque, suivi des données audio accumulées pendant le même temps que les 112 Koctets de données vidéo, et ce quel que soit l'état de remplissage de la zone audio. Par construction, on sait néanmoins que moins de 16 Koctets ont été accumulés.

Dans ce contexte, il n'y a pas de corrélation entre les limites des paquets PES et le début ou la fin d'un banc vidéo ou des données audio accumulées. Les premières données du contenu d'un banc vidéo peuvent tout à fait tomber au milieu d'un paquet PES vidéo, tandis que les dernières données audio accumulées ne correspondent pas forcément à la fin d'un paquet PES audio.
On supposera que les mesures nécessaires pour l'ouverture d'un fichier pour l'écriture d'un flux ont été prises au préalable au niveau du système de fichiers du disque.
Aux données vidéo et audio s'ajoutent un identificateur du fichier auquel appartient le bloc du disque et une donnée indiquant la quantité de données audio, dérivée de l'état du pointeur d'écriture de la zone audio 205b de la mémoire 205 au moment de l'atteinte de la limite de remplissage du banc vidéo. L'identificateur est codé sur 16 bits, tandis que la quantité de données audio l'est sur 14 bits. La figure 4 illustre la disposition des données dans un bloc sur le disque. La partie de la zone audio du bloc ne contenant pas de données audio est remplie de bits de bourrage pour compléter ces données à 16 Koctets.
En cas d'enregistrement de paquets TS, il n'est évidemment pas nécessaire d'indiquer une quantité de données audio.
L'identificateur de fichiers est le même pour tous les blocs appartenant à un même fichier. L'identificateur d'un fichier est une information redondante avec celle contenue dans une structure de données appelée noeud et associée à chaque fichier. L'identificateur est cependant utilisé si un fichier ouvert en écriture n'a pas été correctement fermé : le système de fichiers identifie alors tous les blocs appartenant à un même fichier grâce à l'identificateur de fichier et met à jour les paramètres correspondants dans le noeud du fichier et dans les autres structures de données enregistrées au début de la partie du disque réservée au système de fichier 'Flux'. Le récepteur connaît l'identificateur du fichier ouvert car celui-ci est inscrit dans un drapeau sur le disque (au noeud numéro 0) au début de chaque ouverture de fichier, ce drapeau étant remis à zéro à la fermeture de ce fichier.
Il apparaît que le calage des données audio sur les données vidéo entraîne la non-utilisation d'une partie variable de la zone audio de 16 Koctets d'un bloc du disque. Cependant, la taille de cette partie non utilisée est relativement faible par rapport aux 128 Koctets du bloc entier. Si l'enregistrement des paquets vidéo et audio était effectué dans l'ordre de démultiplexage des paquets PES, alors l'enregistrement de la nature de chaque paquet (audio ou vidéo, par exemple sous la forme d'un identificateur PID) aurait été nécessaire. La place requise pour cet enregistrement aurait été d'une part plus importante que celle réservée aux bits de bourrage dans la partie audio des blocs enregistrés et d'autre part plus complexe à gérer.
Les avantages du calage des données audio sur les données vidéo sont cependant importants. En effet, même si les données audio et vidéo ne sont pas multiplexées de la même manière que dans le flux audio/vidéo entrant, le synchronisme entre données audio et vidéo est globalement maintenu. Les données audio dans un bloc sont en effet celles ayant été reçues temporellement multiplexées avec les données vidéo du même bloc. On peut ainsi restituer un flux audio/vidéo au décodeur sans dérive du synchronisme qui pourrait entraîner à la relecture un débordement de buffers audio ou vidéo.
Le synchronisme est également maintenu si l'on enregistre directement le flux TS.
L'utilisation de quatre bancs de mémoire vidéo de 112 Koctets chacun en lecture et/ou en écriture, ainsi que d'une zone audio de 64 Koctets permet de compenser les temps de déplacement de la tête d'écriture du disque et d'éventuels problèmes d'accès au disque qui pourraient retarder l'écriture. Le microprocesseur 107 tente néanmoins de garder vide le plus grand nombre de bancs de la mémoire 205, ce que l'on peut appeler une gestion de type buffer vide. Pour transférer les données audio/vidéo vers le disque, le microprocesseur 107 déclenche un mécanisme d'accès mémoire direct ('DMA') qui effectue le transfert des données audio/vidéo du démultiplexeur 106 vers un banc vidéo et la zone audio de la mémoire FIFO 205. Dans le cadre de l'exemple de réalisation, il s'agit d'un DMA intégré directement au démultiplexeur 106.
Lorsqu'un banc vidéo de la mémoire 205 est plein, le circuit de contrôle de transfert d'écriture 207 génère une interruption en direction du microprocesseur 107, l'écriture se poursuivant dans le banc de mémoire FIFO vidéo suivant. Les bancs de mémoire FIFO vidéo sont mis en oeuvre tour à tour. Le microprocesseur, qui gère également le système de fichiers du disque, détermine le premier secteur d'écriture de 512 octets du bloc de 128 Koctets, et le fournit au disque par l'intermédiaire du circuit de commande 209. Le microprocesseur initialise également le mécanisme d'accès mémoire direct auprès du disque pour le transfert des données à partir du premier banc de mémoire FIFO vidéo et la quantité d'audio correspondante de la FIFO audio 205b de la mémoire 205. Le disque inscrit alors 128 Koctets dans 256 secteurs sous contrôle du circuit 207. En fin de transfert des 128 Koctets de données le disque dur quitte le mode Ultra DMA, le circuit de contrôle 207 libère le mode Ultra DMA et l'indique au microprocesseur par une interruption. Ce transfert est répété à chaque fois que le microprocesseur reçoit une requête d'interruption par l'intermédiaire du circuit de contrôle 207 et jusqu'à ce qu'il soit décidé d'arrêter l'enregistrement. Le microprocesseur met alors à jour le noeud correspondant au fichier dans lequel l'écriture a eu lieu, ainsi que les tables de bits correspondantes. Le rôle des tables de bits et du noeud sera vu plus en détail plus loin.
Il est à noter que selon le présent exemple de réalisation, la zone audio de chaque mémoire 205 et 206 n'est pas organisée en bancs de taille fixe, comme c'est le cas pour les bancs vidéo de 112 Koctets. Les zones audio sont gérées en mémorisant, en écriture, la quantité de données audio écrites pour chaque banc vidéo associé, et en lecture, en prenant en compte l'information relative à la quantité audio lue dans chaque bloc.
Selon le présent exemple de réalisation, seules les données PES sont enregistrées sur le disque. Ceci signifie que les valeurs d'horloge de référence ('PCR') ne sont pas enregistrées. Cependant, comme déjà mentionné, il serait également envisageable d'enregistrer des paquets de la couche de transport TS.

Le mécanisme de lecture diffère sensiblement du mécanisme d'écriture. On considère une phase d'initialisation de la lecture et un régime permanent de lecture.
Pour initialiser la lecture en mode flux, le microprocesseur transmet au disque dur l'adresse du premier secteur du premier bloc à transférer et demande le transfert de 256 secteurs. Une fois le transfert achevé, le circuit de contrôle de transfert 207 génère une interruption pour indiquer la fin du transfert. Le microprocesseur requiert ensuite le transfert du prochain bloc, et ainsi de suite jusqu'à ce que les quatre bancs de mémoires FIFO vidéo du bloc 206 (et une partie de la zone audio 206b) soient remplis. Le microprocesseur initialise seulement alors le transfert et le décodage des données vers le décodeur 113. Une fois l'initialisation effectuée, le transfert des données s'opère sans intervention du microprocesseur : le décodeur 113 lit les données audio et vidéo au fur et à mesure de l'évolution des besoins. La vitesse de vidage des mémoires FIFO dépend en effet du contenu des paquets audio et vidéo compressés.
Le régime permanent est le suivant : lorsqu'un banc de mémoire de 112 Koctets de FIFO vidéo est totalement vidé (et que les données audio correspondantes ont également été lues), une requête d'interruption vient en informer le microprocesseur, qui déclenche le transfert d'un nouveau bloc, de façon à maintenir remplis si possible tous les bancs vidéo FIFO. Cette gestion est du type buffer plein.

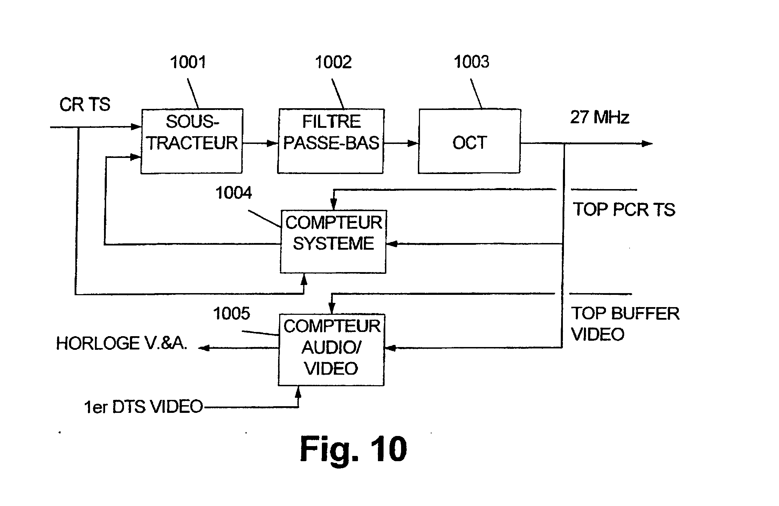

Selon le présent exemple de réalisation, la récupération de l'horloge système est effectuée en démultiplexant des paquets de transport correspondant à un programme en cours, et en verrouillant une boucle à verrouillage de phase sur les valeurs d'horloge de référence ('PCR') d'un flux TS entrant. Cette opération permet d'obtenir la fréquence d'horloge de 27 MHz requise. On utilise donc un flux TS entrant pour récupérer le rythme d'horloge de référence, même si cette horloge est utilisée en conjonction avec des données audio et vidéo non diffusées en temps réel dans ce flux.
Ce principe de récupération du rythme d'horloge est illustré par le schéma bloc de la figure 10, qui comporte une boucle à verrouillage de phase (PLL) composée d'un comparateur/soustracteur 1001, suivi d'un filtre passe-bas 1002 et d'un oscillateur contrôlé en tension 1003. Un compteur 1004 ferme la boucle entre la sortie de l'oscillateur 1003 et une entrée du comparateur/soustracteur 1001. Le comparateur/soustracteur reçoit en outre les valeurs d'horloge PCR issus d'un flux TS. La différence entre une valeur d'horloge locale issue du compteur 1004 et la valeur d'horloge PCR est transmise au filtre passe-bas 1002, et le rythme du signal de sortie de la boucle est adapté en conséquence. La valeur d'horloge contenue dans le compteur 1004 est régulièrement mise à jour avec la valeur d'horloge PCR démultiplexée, ce qui a pour effet de synchroniser le compteur 1004 sur l'horloge de l'encodeur du flux TS. Cette horloge est utilisée pour le décodage et la présentation du flux TS reçu en temps réel. Comme décrit plus loin, seul le rythme de l'horloge en sortie de la boucle PLL est utilisé pour le décodage et la présentation de données lues à partir du disque dur.
D'autres procédés de récupération d'horloge peuvent être employés. On peut notamment utiliser une horloge libre. En effet, la précision requise pour l'horloge de 27 MHz n'est pas nécessairement aussi grande que celle imposée par le standard MPEG II au niveau de l'encodeur, à savoir 30 ppm. Cette précision n'est requise que si effectivement un flux en provenance directe d'un encodeur doit être décodé. Dans un tel cas en effet, une dérive trop importante de l'horloge du décodeur peut entraîner un assèchement ou un débordement de la mémoire tampon du décodeur. Cependant, dans le cas de la lecture d'un flux à partir d'un disque dur local, les inventeurs ont constaté que cette contrainte tombe : le décodeur peut en effet réguler le débit du flux en lecture en fonction de ses besoins, ce qui n'est pas le cas lorsque le flux lui parvient directement, sans qu'il ne soit passé par le tampon que constitue le disque.

Le décodage des trames vidéo est déclenché à un niveau de remplissage donné d'un buffer de décodage, faisant partie de la mémoire vive 126. Ce niveau est par exemple de 1,5 Mbit, pour un buffer d'une capacité de 1,8 Mbit. Cet instant, appelé TOP BUFFER VIDEO, est considéré comme instant de référence pour le décodage et la présentation des trames vidéo. La valeur d'horloge DTS de la première trame lue dans le buffer du décodeur est chargée dans le compteur 1005 de la figure 10. Ce compteur compte au rythme de l'horloge générée par la boucle PLL. Le décodage de la première trame vidéo est déclenché immédiatement, tandis que la présentation de cette première trame ainsi que le décodage et la présentation des trames suivantes s'effectuent suivant les valeurs d'horloge DTS et PTS correspondantes, par rapport à l'horloge générée par le compteur 1005.
Le décodage et la présentation des trames audio font également appel à l'horloge ainsi régénérée.

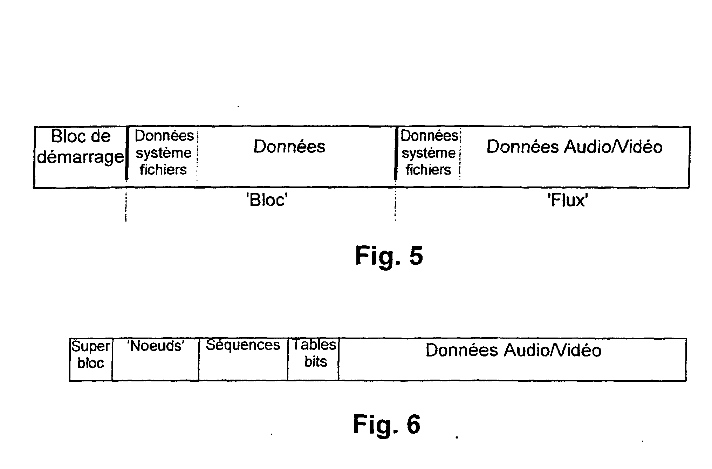

La figure 5 illustre la façon dont les deux systèmes de fichier 'Bloc' et 'Flux' cohabitent sur le disque dur. Selon le présent exemple de réalisation, le système de fichier et sa zone de données associée 'Bloc' occupent plusieurs centaines de Mégaoctets, tandis que le système de fichier 'Flux' et sa zone de données occupent plusieurs Gigaoctets.
On ne détaillera pas d'avantage le système de fichier 'Bloc', l'organisation du système de fichiers correspondant étant de facture classique, par exemple de type UNIX ou MINIX, comprenant un 'superbloc', une table de noeuds, une table de blocs de données, ainsi que les zones de noeuds et de données proprement dites.. Une caractéristique de ce système de fichier est cependant qu'il favorise un accès aléatoire aux données, par exemple par l'emploi d'un adressage à indirection multiple (c'est à dire une série de pointeurs d'adresses dont le dernier seulement donne l'adresse du bloc de données recherché), tandis que le système de fichiers 'Flux' a pour caractéristique d'optimiser un accès séquentiel.
Le disque dur comporte en outre un bloc de démarrage ('Boot block' en langue anglaise) unique pour l'ensemble des deux systèmes de fichiers. Les paramètres figurant dans le bloc de démarrage sont l'index du programme de démarrage, le nom du volume, le nombre d'octets par secteur, le nombre de secteurs du volume, ainsi que le nombre de secteurs du bloc de démarrage.

Comme déjà mentionné, les paramètres choisis pour le système de fichiers 'Flux' sont les suivants : la taille d'un secteur est de 512 octets, un bloc 'Flux' comportant 256 secteurs.
Ceci est à comparer avec la taille d'un bloc du système de fichiers 'Bloc', à savoir 4 secteurs.
La figure 6 illustre l'organisation du système de fichiers 'Flux'. Ce système de fichiers comporte en premier lieu un bloc dit 'superbloc', contenant des informations générales sur le système de fichiers. La table 1 donne les informations contenues dans ce superbloc :

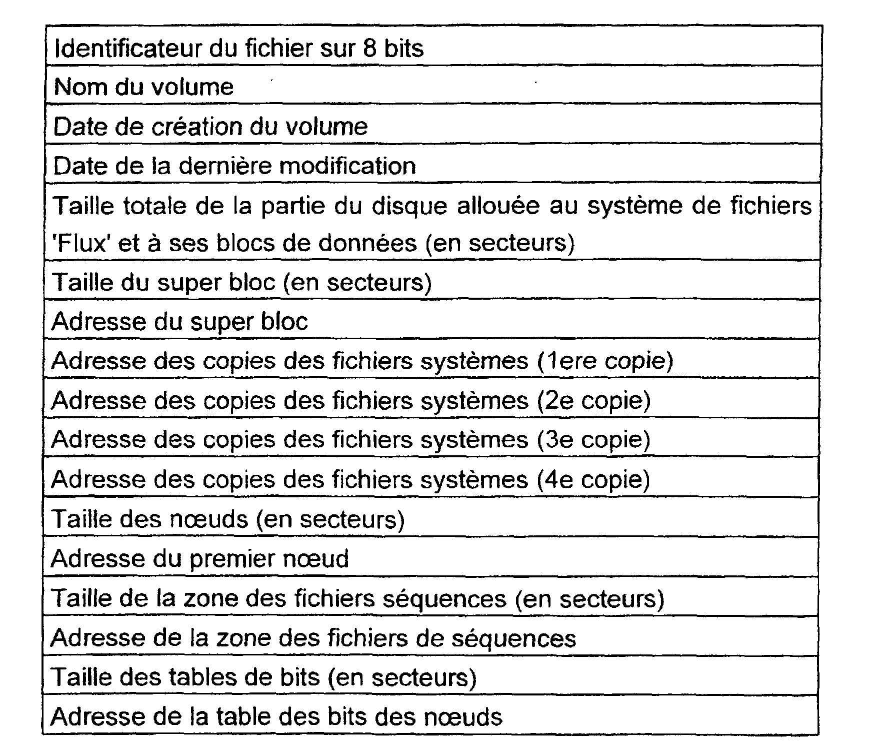

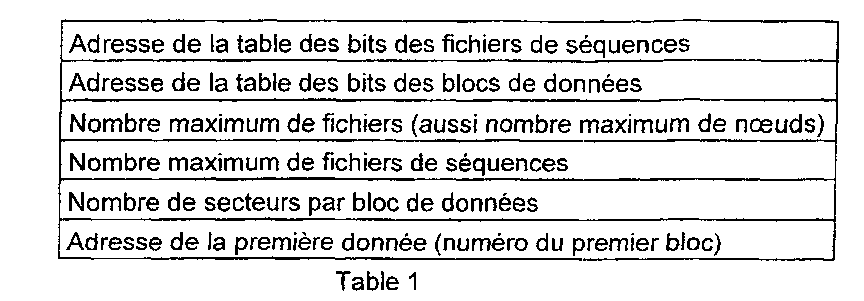

Les adresses sont données en numéros de secteur, tous les secteurs du disque étant numérotés de 0 jusqu'au nombre maximum de secteurs du disque.

On associe à chaque fichier ou répertoire du système de fichiers une structure de données appelée un 'noeud' qui indique le nom du fichier ou du répertoire, sa taille, son emplacement et celui de ses attributs. Les noeuds sont regroupés dans le système de fichiers après le superbloc. La table 2 indique la composition d'un noeud :

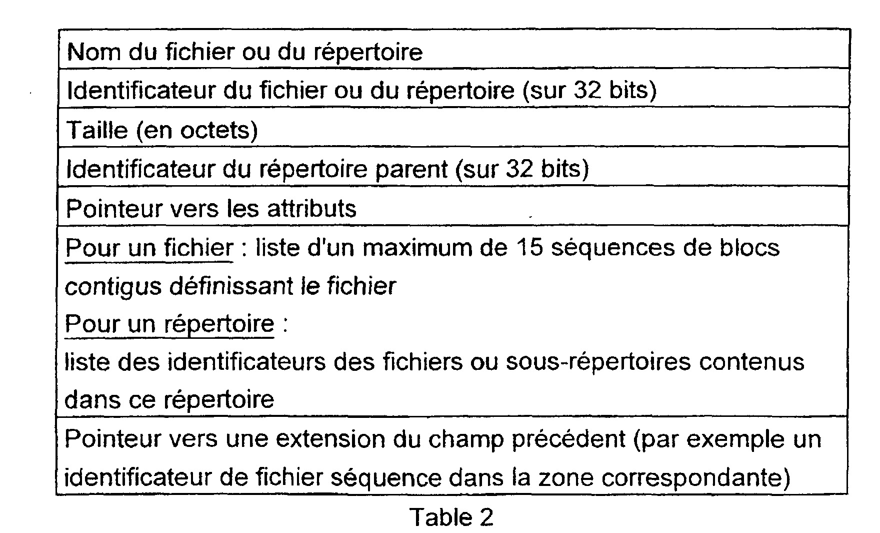

Une séquence est une suite de blocs contigus faisant partie d'un même fichier. Elle est définie par l'adresse du premier bloc de la séquence, suivi du nombre de blocs contigus. Si le fichier est fragmenté, un pointeur renvoie vers une zone d'extension comportant des séquences supplémentaires (zone des fichiers de séquences) à l'aide d'un identificateur de fichier approprié. Un fichier de séquence peut à son tour renvoyer vers un fichier supplémentaire, et ainsi de suite. Ce type d'adressage à indirection simple s'applique bien à la nature séquentielle des données. On évite ainsi la manipulation successive à plusieurs pointeurs, cette manipulation étant coûteuse en temps. Les indirections multiples sont réservées au système de fichiers 'Bloc', en vue de faciliter un accès aléatoire aux données.
Les attributs sont stockés dans le système de fichiers 'Blocs'. On peut donc faire référence d'un système de fichier à des données gérées dans l'autre.
Les fichiers de séquences supplémentaires sont regroupés dans la section 'Séquences' après la zone réservée aux noeuds (voir figure 6).

Le système de fichiers 'Flux' comporte en outre une 'table de bits' indiquant pour chaque noeud, chaque fichier de séquences supplémentaires et chaque bloc de données s'il est occupé ou non. A cette fin, un bit est associé à chaque noeud, fichier de séquences supplémentaire et bloc.

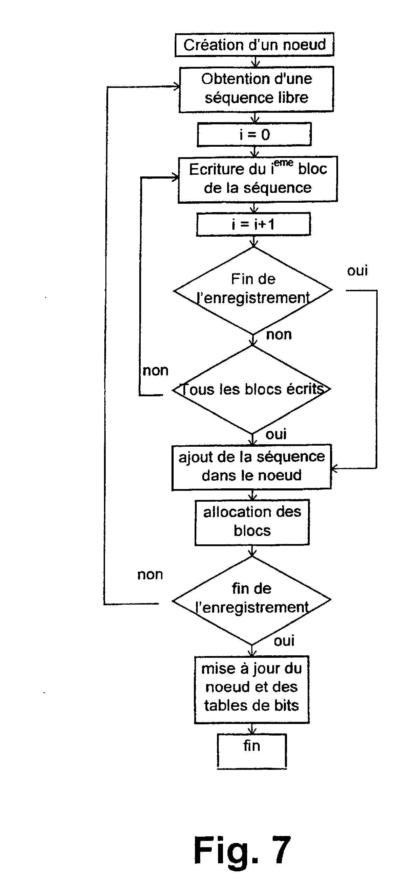

La figure 7 est un organigramme du procédé d'écriture d'un fichier. Dans un premier temps, un noeud associé au fichier est créé. Un emplacement de ce noeud sur le disque est déterminé en scrutant la table des bits des noeuds. En utilisant la table des bits des blocs, le microprocesseur 107 détermine une séquence libre de blocs et y écrit les données à enregistrer, bloc après bloc. En fin de séquence, l'adresse et la longueur de la séquence sont mémorisées dans le noeud du fichier en mémoire. Les drapeaux de la table des bits des blocs correspondant aux blocs alloués à l'enregistrement de la séquence sont ensuite mis à jour dans une table en mémoire. L'opération de détection et d'écriture d'une séquence est répétée si nécessaire, jusqu'à ce que le fichier complet ait été enregistré. Une fois l'enregistrement des données achevé, les informations mises à jour relatives à l'emplacement des données (c'est à dire le noeud et les tables de bits mis à jour) sont eux-mêmes enregistrés sur le disque. Les informations ne sont inscrites sur le disque qu'à la fin de l'enregistrement, dans le but d'éviter d'incessants aller-retours de la tête de lecture/écriture.
Pour lire un fichier, le microprocesseur lit tout d'abord le noeud de ce fichier, ainsi que les définitions de toutes les séquences supplémentaires qui s'y rapportent. On évite ainsi un déplacement de la tête de lecture/écriture du disque pendant la lecture vers les zones en début du système de fichiers.

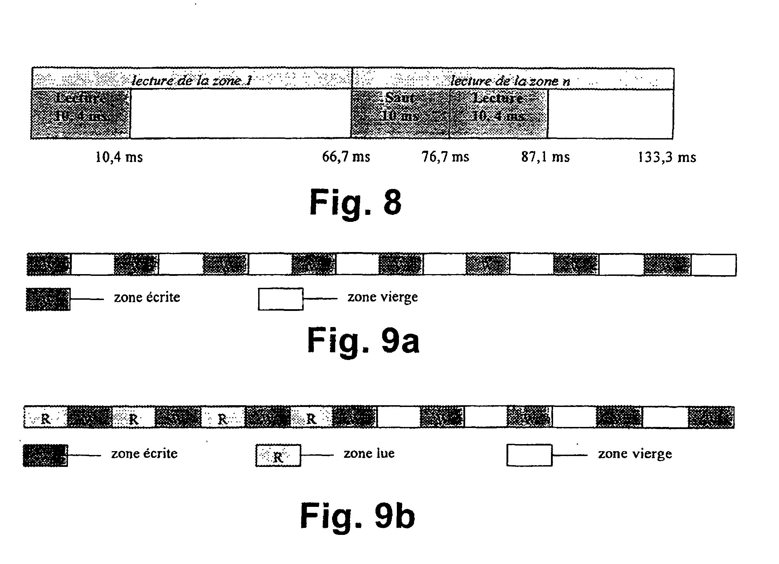

Une des applications envisagées du disque est la lecture en différé d'un programme en cours d'enregistrement. Par exemple, le téléspectateur visualisant un programme en direct doit s'absenter pendant quelques minutes et souhaite reprendre la visualisation au moment précis où elle a été interrompue. Au début de son absence, il lance l'enregistrement du programme. A son retour, il déclenche la lecture du programme, alors que l'enregistrement de ce dernier est toujours en cours. Etant donné que la tête de lecture/écriture doit effectuer des déplacements des zones de lecture vers les zones d'écriture et vice-versa et que le temps de déplacement de la tête est de l'ordre de 10 ms pour le disque utilisé dans le cadre du présent exemple, certaines précautions doivent être prises pour garantir le débit minimum requis pour la lecture et l'écriture.
Pour évaluer l'influence des sauts de tête sur le débit, on se place dans les conditions les plus défavorables en prenant comme exemple celui du débit maximum d'un flux MPEG II, à savoir 15 Mbit/s. Un bloc de 128 Koctets correspondant ainsi à 66,7 ms de données audio et vidéo, comme illustré par la figure 8. La lecture ou l'écriture d'un bloc, à raison d'un transfert à 96 Mbit/s, dure 10,4 ms. Si une lecture n'est pas précédée d'un saut, 56,3 ms restent disponibles en tant que marge de sécurité.
Comme indiqué au paragraphe précédent, un saut de tête d'un premier bloc vers un second bloc non adjacent au premier bloc prend 10 ms. Il reste alors un intervalle libre de 46,3 ms.
Si à l'intérieur d'un intervalle de 66,7 ms, on doit effectuer une lecture et une écriture précédées chacune d'un saut, seuls 25,9 ms restent disponibles. Or, des secteurs défectueux à l'intérieur d'un bloc pouvant également engendrer des sauts de la tête, il est préférable de limiter le nombre de sauts en lecture et en écriture au minimum.
Selon le présent exemple de réalisation, le nombre de sauts de tête lors d'un enregistrement et d'une lecture simultanés est diminué en procédant à une écriture entrelacée des blocs, tel qu'illustré par les figures 9a et 9b.
Lorsque l'enregistrement du programme est déclenché (par exemple par le téléspectateur), l'écriture est effectuée un bloc sur deux dans une séquence de blocs adjacents. Ceci est illustré par la figure 9a. Un saut de la tête de lecture est donc effectué avant l'écriture de chaque bloc.

Lorsque la lecture du programme est déclenchée, l'écriture se poursuit dans les blocs laissés libres précédemment. Par exemple, suite à la lecture du premier bloc inscrit (le plus à gauche sur la figure 9b), la prochaine écriture s'effectue dans le bloc immédiatement adjacent. Aucun saut de la tête de lecture/écriture n'est alors à effectuer entre la lecture dans le premier bloc et l'écriture dans le second bloc. La réduction du nombre de sauts de la tête a aussi pour effet de réduire de façon conséquente le bruit généré par ces déplacements.
Une fois que tous les blocs écrits avant le début de la lecture auront été relus, l'écriture se poursuit de manière non-entrelacée. Selon une variante de réalisation, si le but est uniquement la visualisation en différé du programme, sans que l'enregistrement ait une vocation de pérennité, l'écriture se poursuit en écrasant le contenu des blocs précédemment lus.
Selon une variante de réalisation, si un enregistrement doit être conservé, alors les blocs entrelacés correspondants sont réécrits de manière séquentielle de façon à désentrelacer ces blocs. Ainsi, lors d'une lecture subséquente, la tête de lecture n'aura pas à effectuer de sauts dus à l'entrelacement.
Bien entendu, l'invention ne se limite pas à l'exemple de réalisation donné. Par exemple, d'autres types de disque peuvent être utilisés. Il suffira d'adapter les interfaces correspondantes. On prendra en considération notamment des disques durs ayant d'autres caractéristiques que celui présenté ci-dessus, des disques magnéto-optiques réenregistrables ou d'autres supports de stockage de données.
Il est à noter que l'invention s'applique également dans le cas où les données audio et vidéo sont codées différemment, notamment dans le cas où les paquets PES sont contenus dans un flux de type programme ('Program Stream' en langue anglaise) selon la norme MPEG, ou que les données audio et vidéo sont contenues dans des structures différentes de celles des paquets PES.
D'autre part, bien que certains éléments du mode de réalisation soient présentés sous une forme structurelle distincte, il est bien évident pour un homme du métier que leur implémentation dans un seul circuit physique ne sort pas du cadre de l'invention. De même, l'implémentation logicielle plutôt que matérielle ou vice-versa d'un ou plusieurs éléments ne sort pas du cadre de l'invention : les mémoires de type FIFO peuvent par exemple être émulées par utilisation d'une mémoire à adressage habituel, avec une gestion logicielle de pointeurs d'adresse.

On notera également que les données à stocker peuvent provenir d'un autre moyen de transmission que celui indiqué dans l'exemple de réalisation. En particulier, certaines données peuvent transiter par modem.

Selon l'exemple de réalisation décrit ci-dessus, les zones du disque dur réservées à chacun des deux systèmes de fichiers sont fixes. Selon une variante de réalisation, les tailles de ces zones sont dynamiquement adaptées aux besoins. On prévoit ainsi une première zone de données système pour le système de fichiers 'Bloc', une seconde zone de données système pour le système de fichiers 'Flux', puis une unique zone de blocs de type 'Flux'. La gestion du système de fichiers 'Flux' est effectuée comme précédemment. La gestion du système de fichiers 'Bloc' est effectuée de la façon suivante: Lorsqu'un fichier de ce type doit être enregistré, le système de fichiers 'Bloc' réserve le minimum de blocs de grande taille nécessaires, et fragmente ces blocs de grande taille (256 secteurs selon le présent exemple) en blocs de petite taille (4 secteurs). La table de bits des noeuds et la table de bits de zones du système de fichiers 'Bloc' gèrent ces fragments de blocs comme s'il s'agissait de blocs de petite taille.

## Revendications

1. Dispositif de réception de vidéo numérique, **caractérisé en ce qu'**il comprend :
- des moyens de réception (101, 102, 103) et de démultiplexage (113) d'un flux numérique multiplexé ;
- des moyens de stockage du flux numérique démultiplexé (201) comprenant deux systèmes de fichiers possédant des tailles de blocs d'enregistrement différentes.

2. Dispositif selon la revendication 1, **caractérisé en ce que** les blocs du premier système de fichiers sont de grande taille et adaptés à l'enregistrement de flux audio/vidéo et **en ce que** les blocs du second système de fichiers sont de taille plus faible et adaptés à l'enregistrement de fichiers de plus petite taille que les flux audio/vidéo.

3. Dispositif selon la revendication 1 ou 2, **caractérisé en ce que** la taille de blocs du premier système de fichiers est plus grande au moins d'un ordre de grandeur que la taille de blocs du second système de fichiers.

4. Dispositif selon l'une des revendications 1 à 3, **caractérisé en ce que** le premier système de fichiers est adapté à un accès séquentiel des données enregistrées, tandis que le second système de fichiers est adapté à un accès aléatoire des données qui y sont enregistrées.

5. Dispositif selon la revendication 4, **caractérisé en ce que** le premier système de fichiers comporte un adressage à indirection simple, tandis que le second système de fichiers comporte un adressage à indirection multiple.

6. Dispositif selon l'une des revendications 1 à 5, **caractérisé en ce que** les moyens de stockage (201) comprennent un disque enregistrable comportant un bloc de démarrage unique, une première zone réservée aux données de service du premier système de fichier et aux blocs de données correspondants, et une seconde zone réservée aux données de service du second système de fichiers et aux blocs de données correspondants.

7. Dispositif selon l'une des revendications 1 à 6, **caractérisé en ce qu'**il comporte
une première mémoire (205a) d'écriture vidéo pour l'accumulation d'une quantité prédéterminée de paquets vidéo démultiplexés ;
une seconde mémoire (205b) d'écriture audio pour l'accumulation de paquets audio démultiplexés ;
les moyens de stockage (201) étant adaptés pour stocker les paquets audio et vidéo remultiplexés sous la forme de blocs du premier système de fichiers, chaque bloc comportant une première zone pour l'enregistrement des paquets vidéo et de taille fixe égale à ladite quantité prédéterminée, et une seconde zone pour l'enregistrement pour des paquets audio et de taille fixe telle qu'elle soit supérieure ou égale à la quantité maximale de données audio accumulables pendant l'obtention de la quantité prédéterminée de données vidéo.

8. Dispositif selon la revendication 7, **caractérisé en ce qu'**il comporte:
une troisième mémoire (206a) de lecture vidéo pour la lecture de données vidéo à partir des moyens de stockage (201); et
une quatrième mémoire (206b) lecture audio pour la lecture de données audio, les tailles respectives des troisième et quatrième mémoires, respectivement lecture vidéo et audio étant égales aux tailles des première et seconde mémoires, respectivement écriture vidéo et audio.

9. Dispositif selon l'une des revendications 7 ou 8, **caractérisé en ce qu'**il comporte
- une mémoire d'écriture (205) pour transmettre des données aux moyens de stockage, organisée en une zone (205a) comportant N mémoires écriture vidéo de type FIFO et une zone (205b) écriture audio comportant une mémoire de type FIFO ayant la taille de N mémoires écriture audio ;
- des moyens (107) pour commander le transfert de données vidéo vers une première des N mémoires écriture vidéo et de données audio vers la zone d'écriture audio, le transfert de données vidéo se poursuivant vers une mémoire écriture vidéo suivante lorsque ladite première des N mémoires écriture vidéo est pleine ;
- des moyens (207) de mémorisation de l'emplacement, dans la zone d'enregistrement de données audio, des données audio correspondant à chacune des N mémoires écriture vidéo.

10. Dispositif selon la revendication 9, **caractérisé en ce qu'**il comporte en outre des moyens (107) pour initier le transfert des données vidéo et audio mémorisées dans ladite mémoire d'écriture vers les moyens de stockage (201) dès qu'une des N mémoires d'écriture vidéo a été remplie.

11. Dispositif selon la revendication 8 **caractérisé en ce qu'**il comporte :
- une mémoire de lecture (206) pour recevoir des données à partir des moyens de stockage, organisée en une zone (206a) comportant N mémoires lecture vidéo de type FIFO et une zone (206b) lecture audio comportant une mémoire de type FIFO ayant la taille de N mémoires lecture audio ;
- des moyens (107) pour commander le transfert de données vidéo vers une première des N mémoires lecture vidéo et de données audio vers la zone de lecture audio, le transfert de données vidéo se poursuivant vers une mémoire lecture vidéo suivante lorsque ladite première des N mémoires lecture vidéo est pleine ;
- des moyens (207) de mémorisation de l'emplacement, dans la zone de lecture de données audio, des données audio correspondant à chacune des N mémoires lecture vidéo.

12. Dispositif selon la revendication 11, **caractérisé en ce qu'**il comporte en outre des moyens (107) pour initier le transfert des données vidéo et audio mémorisées dans ladite mémoire de lecture vers un décodeur desdites données lorsque l'ensemble des N mémoires de lecture vidéo a été rempli.

13. Procédé d'enregistrement de données audio et vidéo dans un récepteur de télévision numérique, **caractérisé en ce qu'**il comporte les étapes de :
- démultiplexage de paquets audio et vidéo relatifs à un même programme ;
- accumulation simultanée des données vidéo démultiplexées dans une première mémoire et des données audio démultiplexées dans une seconde mémoire ;
- arrêt de l'accumulation dans lesdites mémoires suite à l'obtention d'une quantité prédéterminée de données vidéo dans ladite première mémoire ;
- enregistrement des données vidéo accumulées dans ladite première mémoire et des données audio accumulées dans la seconde mémoire respectivement dans une première zone d'un bloc dont la taille fixe est égale à ladite quantité prédéterminée et dans une seconde zone de ce bloc, la taille de cette seconde zone étant fixe et choisie de manière à ce qu'elle soit supérieure ou égale à la quantité maximale de données audio accumulables pendant l'obtention de ladite quantité prédéterminée de données vidéo.

14. Procédé selon la revendication 13, **caractérisé en ce que** le rapport entre les tailles des première et seconde zones est tel qu'il est supérieur ou égal au rapport maximal du débit de données vidéo et du débit de données audio dans le flux numérique.

15. Procédé selon la revendication 13 ou 14, **caractérisé en ce qu'**il comprend en outre l'étape d'enregistrement dans chaque bloc d'une donnée indiquant la quantité de données audio enregistrées dans ce bloc.

16. Procédé selon l'une des revendications 13 à 15, **caractérisé en ce que** les données audio et vidéo enregistrées sont des paquets de flux élémentaires, à l'exclusion d'informations issues de la couche transport.

17. Dispositif d'enregistrement (201) de données audio et vidéo **caractérisé en ce qu'**il comporte un double système de fichiers dont le premier système est destiné à enregistrer des fichiers de type flux audio/video et dont le second système de fichiers comporte des blocs de plus petite taille et est destiné à enregistrer des fichiers de plus petite taille que les flux audio/vidéo.

18. Dispositif selon la revendication 17, **caractérisé en ce qu'**il comporte un disque réenregistrable divisé en secteurs, des blocs de données du premier système de fichiers ayant une taille d'au moins 256 secteurs, des blocs de données du second système de fichiers ayant une taille de quelques secteurs.

## Patentansprüche

1. Vorrichtung zum Empfang eines digitalen Videosignals,
**gekennzeichnet durch:**
- Mittel zum Empfang (101, 102, 103) und zur Demultiplexierung (113) eines gemultiplexten digitalen Stroms,
- Mittel (201) zur Speicherung des demultiplexierten digitalen Stroms mit zwei Dateisystemen, die Aufzeichnungsblöcke mit unterschiedlichen Abmessungen enthalten.

2. Vorrichtung nach Anspruch 1, **dadurch gekennzeichnet, dass** die Blöcke des ersten Dateisystems eine große Abmessung haben und für die Aufzeichnung des AudioNideo-Stroms vorgesehen sind, und dass die Blöcke des zweiten Dateisystems eine kleinere Abmessung haben und für die Speicherung der Dateien mit einer kleineren Abmessung als die AudioNideo-Ströme vorgesehen sind.

3. Vorrichtung nach Anspruch 1 oder 2, **dadurch gekennzeichnet, dass** die Abmessung der Blöcke des ersten Dateisystems um wenigstens eine Größenordnung größer ist als die Abmessung der Blöcke des zweiten Dateisystems.

4. Vorrichtung nach einem der Ansprüche 1 bis 3, **dadurch gekennzeichnet, dass** das erste Dateisystem für den sequentiellen Zugriff der aufgezeichneten Daten aufgezeichnet wird, während das zweite Dateisystem für den Zufallszugriff der darin gespeicherten Daten vorgesehen ist.

5. Vorrichtung nach Anspruch 4, **dadurch gekennzeichnet, dass** das erste Dateisystem eine einfache, indirekte Adressierung enthält, während das zweite Dateisystem eine mehrfache, indirekte Adressierung enthält.

6. Vorrichtung nach einem der Ansprüche 1 bis 5, **dadurch gekennzeichnet, dass** die Speichermittel (201) eine bespielbare Platte mit einem einzigen Boot-Block, einen ersten Bereich, der für die Servicedaten des ersten Dateisystems und für die entsprechenden Datenblöcke reserviert ist, und einen zweiten Bereich enthalten, der für die Servicedaten des zweiten Dateisystems und für die entsprechenden Datenblöcke vorgesehen ist.

7. Vorrichtung nach einem der Ansprüche 1 bis 6, **gekennzeichnet durch**
einen ersten Videoschreibspeicher (205a) für die Akkumulation einer vorbestimmten Menge von demultiplexierten Videopaketen,
einen zweiten Audioschreibspeicher (205b) für die Akkumulation von demultiplexierten Audiopaketen,
Speichermittel (201), die für die Speicherung der neumultipexierten Audiound Videopakete in der Form von Blöcken des ersten Dateisystems vorgesehen sind, wobei jeder Block einen ersten Bereich zur Aufzeichnung der Videopakete und mit einer festen Abmessung gleich der vorbestimmten Menge vorgesehen ist und ein zweiter Bereich für die Aufzeichnung der Audiopakete und mit fester Abmessung vorgesehen sind, die größer oder gleich der maximalen Menge der Audiodaten ist, die während der Gewinnung der vorbestimmten Menge von Videodaten akkumuliert werden können.

8. Vorrichtung nach Anspruch 7, **gekennzeichnet durch**
einen dritten Videolesespeicher (206a) zum Lesen der Videodaten von den Speichermitteln (201) und
einem vierten Audiolesespeicher (206b) für das Lesen von Audiodaten, wobei die jeweiligen Abmessungen des dritten und des vierten Speichers, das Video- bzw. Audiolesen gleich den Abmessungen des ersten und zweiten Speichers, Video- bzw. Audioschreiben sind.

9. Vorrichtung nach einem der Ansprüche 7 oder 8, **gekennzeichnet durch**
- einen Schreibspeicher (205) zur Übertragung der Daten zu den Speichermitteln, die in einem Bereich (205a) mit N-Videoschreibspeichern vom FIFO-Typ und einem Audioschreibbereich (205b) mit einem Speicher vom FIFO-Typ mit der Abmessung von N Audioschreibspeichern organisiert sind,
- Mittel (107) zur Steuerung der Übertragung der Videodaten zu einem ersten der N Videoschreibspeicher und der Audiodaten zu dem Audioschreibbereich, wobei die Übertragung der Videodaten zu einem nächsten Videoschreibspeicher fortgesetzt wird, wenn der erste der N Videoschreibspeicher voll ist,
- Mittel (207) zur Speicherung der Lage, der jedem der N Videoschreibspeicher entsprechenden Audiodaten in dem Bereich der Aufzeichnung
der Audiodaten.

10. Vorrichtung nach Anspruch 9, **dadurch gekennzeichnet, dass** sie außerdem Mittel (107) zur Auslösung der Übertragung der in dem Schreibspeicher gespeicherten Video- und Audiodaten zu den Speichermitteln (201) enthält, sobald einer der N-Videoschreibspeicher gefüllt ist.

11. Vorrichtung nach Anspruch 8, **gekennzeichnet durch:**
- einen Lesespeicher (206) zum Empfang der Daten von Speichermitteln, die in einem Bereich (206a) organisiert sind, der N-Videolesespeicher vom FIFO-Typ und in einem Audiolesebereich (206b) organisiert ist, der einen Speicher vom FIFO-Typ mit der Abmessung der N-Audiolesespeicher enthält,
- Mittel (107) zur Steuerung der Übertragung der Videodaten zu einem ersten der N-Videolesespeicher und von Audiodaten zu dem Audiolesebereich, wobei die Übertragung der Videodaten zu einem nächsten Videolesespeicher fortgesetzt wird, wenn der erste der N-Videolesespeicher voll ist,
- Mittel (207) zur Speicherung der Lage der jedem der N-Videolesespeicher entsprechenden Audiodaten in dem Bereich für das Lesen der Audiodaten.

12. Vorrichtung nach Anspruch 11, **dadurch gekennzeichnet, dass** sie außerdem Mittel (107) zur Auslösung der Übertragung der in dem Lesespeicher gespeicherten Video- und Audiodaten zu einem Decoder dieser Daten enthält, wenn der Satz von N-Videolesespeicher gefüllt ist.

13. Verfahren zur Speicherung von Audio- und Videodaten in einem digitalen Femsehempfänger, **gekennzeichnet durch** folgende Schritte:
- Demultiplexierung von Audio- und Videopaketen für ein und dasselbe Programm,
- gleichzeitige Akkumulation der demultiplexierten Videodaten in einem ersten Speicher und der demultiplexierten Audiodaten in einem zweiten Speicher,
- Stoppen der Akkumulation in den zweiten Speichern nach der Gewinnung einer vorbestimmten Menge von Videodaten in dem ersten Speicher,
- Aufzeichnung der akkumulierten Videodaten in dem ersten Speicher und der akkumulierten Audiodaten in dem zweiten Speicher jeweils in einem ersten Bereich eines Blocks, dessen feste Abmessung gleich ist zu der vorbestimmten Menge, und in einem zweiten Bereich dieses Blocks, wobei die Abmessung dieses zweiten Bereichs fest und so gewählt ist, dass sie größer als oder gleich der maximalen Menge der Audiodaten ist, die während der Gewinnung der vorbestimmten Menge von Videodaten akkumuliert werden können.

14. Verfahren nach Anspruch 13, **dadurch gekennzeichnet, dass** das Verhältnis zwischen den Abmessungen des ersten und des zweiten Bereichs derart ist, dass es größer als oder gleich dem maximalen Verhältnis der Bitrate der Videodaten und der Bitrate der Audiodaten in dem digitalen Strom ist.

15. Verfahren nach Anspruch 13 oder 14, **gekennzeichnet durch den** Schritt der Aufzeichnung eines Datenworts in jedem Block, das die Menge der in diesem Block aufgezeichneten Audiodaten anzeigt.

16. Verfahren nach einem der Ansprüche 13 bis 15, **dadurch gekennzeichnet, dass** die aufgezeichneten Audio- und Videodaten elementare Strompakete sind mit Ausnahme der Informationen von der Transportschicht.

17. Aufzeichnungsgerät (201) für Audio- und Videodaten, **gekennzeichnet durch** ein doppeltes Dateisystem, wobei das erste System für die Aufzeichnung der Dateien vom AudioNideo-Stromtyp und das zweite Dateisystem Blöcke mit einer kleineren Abmessung enthält und zur Aufzeichnung der Dateien mit kleinerer Abmessung als die AudioNideo-Ströme bestimmt ist.

18. Vorrichtung nach Anspruch 17, **dadurch gekennzeichnet, dass** sie eine in Sektoren aufgeteilte neubespielbare Platte enthält und die Datenblöcke des ersten Dateisystems eine Abmessung von wenigstens 256 Sektoren aufweisen und die Datenblöcke des zweiten Dateisystems eine Abmessung von einigen Sektoren aufweisen.

## Claims

1. A digital video reception device, **characterized in that** it comprises:
- means of reception (101, 102, 103) and of demultiplexing (113) of a multiplexed digital stream;
- means of storage (201) of the digital demultiplexed stream comprising two file systems having different recording block sizes.

2. The device as claimed in claim 1, **characterized in that** the blocks of the first file system are of large size and adapted to the recording of audio/video streams and **in that** the blocks of the second file system are of smaller size and adapted to the recording of files of smaller size than the audio/video streams.

3. The device as claimed in claim 1 or 2, **characterized in that** the block size of the first file system is larger by at least an order of magnitude than the block size of the second file system.

4. The device as claimed in one of claims 1 to 3, **characterized in that** the first file system is adapted to sequential access of the recorded data, whilst the second file system is adapted to random access of the data recorded therein.

5. The device as claimed in claim 4, **characterized in that** the first file system comprises simple indirect addressing, whilst the second file system comprises multiple indirect addressing.

6. The device as claimed in one of claims 1 to 5, **characterized in that** the storage means (201) comprise a recordable disk comprising a single boot block, a first area reserved for the service data of the first file system and for the corresponding data blocks, and a second area reserved for the service data of the second file system and for the corresponding data blocks.

7. The device as claimed in one of claims 1 to 6, **characterized in that** it comprises
a first video writing memory (205a) for accumulating a predetermined quantity of demultiplexed video packets;
a second audio writing memory (205b) for accumulating demultiplexed audio packets;
the means of storage (201) being adapted to store the remultiplexed audio and video packets in the form of blocks of the first file system, each block comprising a first area for recording the video packets and of fixed size equal to said predetermined quantity, and a second area for recording for audio packets and of fixed size such that it is greater than or equal to the maximum quantity of audio data which can be accumulated while obtaining the predetermined quantity of video data.

8. The device as claimed in claim 7, **characterized in that** it comprises
a third video reading memory (206a) for reading video data from the storage means (201);
and a fourth audio reading memory (206b) for the reading of audio data, the respective sizes of the third and fourth memories, video and audio reading respectively, being equal to the sizes of the first and second memories, video and audio writing respectively.

9. The device as claimed in either of claims 7 and 8, **characterized in that** it comprises:
- a writing memory (205) for transmitting data to the storage means, which memory is organized as an area (205a) comprising N video writing memories of FIFO type and an audio writing area (205b) comprising a memory of FIFO type having the size of N audio writing memories;
- means (107) for controlling the transfer of video data to a first of the N video writing memories and of audio data to the audio writing area, the transfer of video data being continued to a next video writing memory when said first of the N video writing memories is full;
- means (207) for storing the location, in the area for recording audio data, of the audio data corresponding to each of the N video writing memories.

10. The device as claimed in claim 9, **characterized in that** it furthermore comprises means (107) for initiating the transfer of video and audio data stored in said writing memory to the storage means (201) as soon as one of the N video writing memories has been filled.

11. The device as claimed in claim 8, **characterized in that** it comprises:
- a reading memory (206) for receiving data from storage means, which memory is organized as an area (206a) comprising N video reading memories of FIFO type and an audio reading area (206b) comprising a memory of FIFO type having the size of N audio reading memories;
- means (107) for controlling the transfer of video data to a first of the N video reading memories and of audio data to the audio reading area, the transfer of video data being continued to a next video reading memory when said first of the N video reading memories is full;
- means (207) for storing the location, in the area for reading audio data, of the audio data corresponding to each of the N video reading memories.

12. The device as claimed in claim 11, **characterized in that** it furthermore comprises means (107) for initiating the transfer of video and audio data stored in said reading memory to a decoder of said data when the set of N video reading memories has been filled.

13. A process for recording audio and video data in a digital television receiver, **characterized in that** it comprises the steps of:
- demultiplexing audio and video packets relating to one and the same program;
- simultaneous accumulation of the demultiplexed video data in a first memory and of the demultiplexed audio data in a second memory;
- stopping the accumulation in said memories following the obtaining of a predetermined quantity of video data in said first memory;
- recording of the video data accumulated in said first memory and of the audio data accumulated in the second memory respectively in a first area of a block whose fixed size is equal to said predetermined quantity and in a second area of this block, the size of this second area being fixed and chosen in such a way that it is greater than or equal to the maximum quantity of audio data which can be accumulated while obtaining said predetermined quantity of video data.

14. The process as claimed in claim 13, **characterized in that** the ratio of the sizes of the first and second areas is such that it is greater than or equal to the maximum ratio of the bit rate of video data and of the bit rate of audio data in the digital stream.

15. The process as claimed in claim 13 or 14, **characterized in that** it furthermore comprises the step of recording in each block of a data item indicating the quantity of audio data recorded in this block.

16. The process as claimed in one of claims 13 to 15, **characterized in that** the recorded audio and video data are elementary stream packets, with the exclusion of information emanating from the transport layer.

17. An audio and video data recording device (201), **characterized in that** it comprises a double file system wherein the first system is intended to record files of audio/video stream type and wherein the second file system is comprises blocks of smaller size and is intended to record files of smaller size than the audio/video streams.

18. The device as claimed in claim 17, **characterized in that** it comprises a rerecordable disk divided into sectors, data blocks of the first file system having a size of at least 256 sectors, data blocks of the second file system having a size of a few sectors.
